# EUROPEAN PATENT APPLICATION

(11) **EP 1 684 522 A1**
(43) Date of publication of application: **26.07.2006**
(21) Application number: 05111848.7
(22) Date of filing: 08.12.2005
(51) Int. Cl.: H04N 7/26

(54) **Moving picture encoder, decoder, and method for generating coded video data stream**

(30) Priority: 21.01.2005 JP 2005014245
(71) Applicant: KABUSHIKI KAISHA TOSHIBA, Tokyo 105-8001 (JP)
(72) Inventor: Kikuchi, Yoshihiro Toshiba Corporation, Tokyo, 105-8001 (JP)
(74) Representative: Henkel, Feiler & Hänzel

(57) **Abstract**

The present invention restricts a method of assigning unit identification numbers when parameter sets (SPS and PPS) are arranged in a stream. This makes it possible to simplify a decode process and to increase the speed of the process. In a stream containing a plurality of picture units (P), a plurality of picture parameter units (PPS), and a plurality of system parameter units (SPS), the units (P, PPS, and SPS) being arranged in the direction of time series, if a plurality of units (PPS) have the same parameter set contents, the same unit identification number is assigned to the units (PPS). If the parameter set contents of the unit (PPS) referenced by the preceding unit (P1) are different from those of the unit (PPS) referenced by the next current unit (P2), the unit (PPS) referenced by the current unit (P2) is provided with a unit identification number different from that for the preceding unit.

## Description

The present invention relates to a moving picture encoder, a decoder, and a method for generating an encoded stream. In particular, the present invention relates to a technique for improving a method for arranging and managing units containing parameter sets required to decode image compressed data to make data handling convenient when the image compressed data is decoded, as well as the structure of a stream.

In recent years, techniques for encoding and decoding moving pictures have been increasingly evolved. This is due to the improved quality of moving pictures, an increase in the amount information available, and the development of wired or wireless networks leading to growing demands for transmission of image information through the networks.

The moving picture encoding and decoding technique is desired to have a high compression efficiency, a high decoding quality, a high transmission efficiency, and the like. A moving picture encoding and decoding technique called H.264/AVC (Advanced Video Coding) has recently been documented and accepted as an international standard. H.264/AVC defines a sequence parameter set (SPS) and a picture parameter set (PPS).

SPS is header information on the entire sequence such as a profile, a level, and an encoding mode for the entire sequence. SPS affects the capabilities of a decoder.

The profiles used include a baseline profile, a main profile, and a high profile and require different encoding tools. The level specifies transmission rate, image size, and the like and ranges from 1 to 5.1. For the entire sequence, the processing capabilities of a decoder depend on the combination of the level and profile. In this case, the sequence is composed of moving pictures but may include units each consisting of a specified number of frames (for example, 20 to 30 frames).

PPS is information on units smaller than SPS. PPS is header information indicative of an encoding mode (for example, an entropy encoding mode or a quantization parameter initial value for each picture) for all the related pictures.

When a decoder decodes compressed data on moving pictures, a controller in the decoder references SPS and PPS. A decode operation of the decoder is controlled in accordance with the parameters. Accordingly, if the parameter sets (SPS and PPS) are arranged in a stream, they must be sent to the decoder before the compressed data referencing the parameter set is. This condition is defined in H.264/AVC. A related document is H.264 TEXTBOOK H.264/AVC compiled under the supervision of Sakae Ohkubo and edited by Shinya Kakuno, Yoshihiro Kikuchi, and Teruhiko Suzuki.

In the conventional H.264/AVC, the parameter sets (SPS and PPS) are freely arranged in a stream as described above. That is, to arrange the parameter sets (SPS and PPS) in the stream, they have only to be set so as to reach the decoder before the data referencing the parameter sets does. Thus, an unrelated parameter set or compressed data may be placed between the parameter sets and the data referencing them.

According to the above rule, the decoder decodes all the incoming SPSs and PPSs. That is, the decoder decodes all PPSs and uses the parameter sets contained in PPSs referenced by a picture unit. However, the parameter sets contained in a plurality of PPSs do not always have different contents. A large number of parameter sets have the same contents.

This complicates the decode process. Further, the above rule presents a problem if decoding of compressed data starts in the middle of the stream or if the compressed data starts to be decoded on the basis of random accesses after the stream has been recorded on recording media. That is, the data referencing the parameter sets cannot reference the desired parameter sets.

An object of the embodiments is to provide a moving picture encoder, a decoder, and a method for generating an encoded stream in which if parameter sets (SPS and PPS) are arranged in a stream, it is possible to simplify a decoding process and increase the speed of the process by restricting a method for assigning unit identification information on the parameter sets. Another object of the embodiments is to provide a moving picture encoder, a decoder, and a method for generating an encoded stream in which the stream is partitioned into certain units (GOVU) so that the unit identification information is assigned to the parameter sets (PPS and SPS) on the basis of the units, thus simplifying the process of assigning the identification information and facilitating an editing process.

In an embodiment according to the present invention, in a stream containing a plurality of units (P) each containing unit identification information and image compressed data as well as a reference target unit information, and units (PPS) each containing unit identification information and referenced by the unit (P), the unit (PPS) containing a parameter set used to decode the image compressed data, the units (P) and the units (PPS) being arranged in a direction of time series, if the parameter sets in a plurality of units (PPS) referenced by the unit (P) have the same contents, the same unit identification information is assigned to the units (PPS).

Moreover, a unit (GOVU) is defined so that the stream is partitioned into predetermined information units (GOVU) each containing the units (P and PPS), and the same unit identification number is assigned to the units (PPS) in the unit (GOVU) having the same parameter set contents.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the basic configuration of a moving picture encoder in accordance with the present invention;
FIG. 2 is a diagram showing the basic configuration of a decoder in accordance with the present invention;
FIG. 3 is a diagram illustrating a stream structure in accordance with the present invention;
FIG. 4 is a diagram illustrating the types and contents of NAL units in accordance with the present invention;
FIG. 5 is a diagram illustrating typical types of NAL units in accordance with the present invention;
FIG. 6 is a diagram illustrating rules for assignment of identification numbers to PPS units which rules are the point of the present invention;
FIG. 7 is a diagram schematically showing the rules for assignment of identification numbers to PPS units which rules are the point of the present invention;
FIG. 8 is a block diagram showing a PPS managing section shown in FIG. 1, in detail;
FIG. 9 is a block diagram showing a PPS analyzing section shown in FIG. 2, in detail;
FIG. 10 is a flowchart showing one of operations of the encoder shown in FIG. 1 which is an essential part of the present invention; and
FIG. 11 is a flowchart showing one of operations of the decoder shown in FIG. 2 which is an essential part of the present invention.

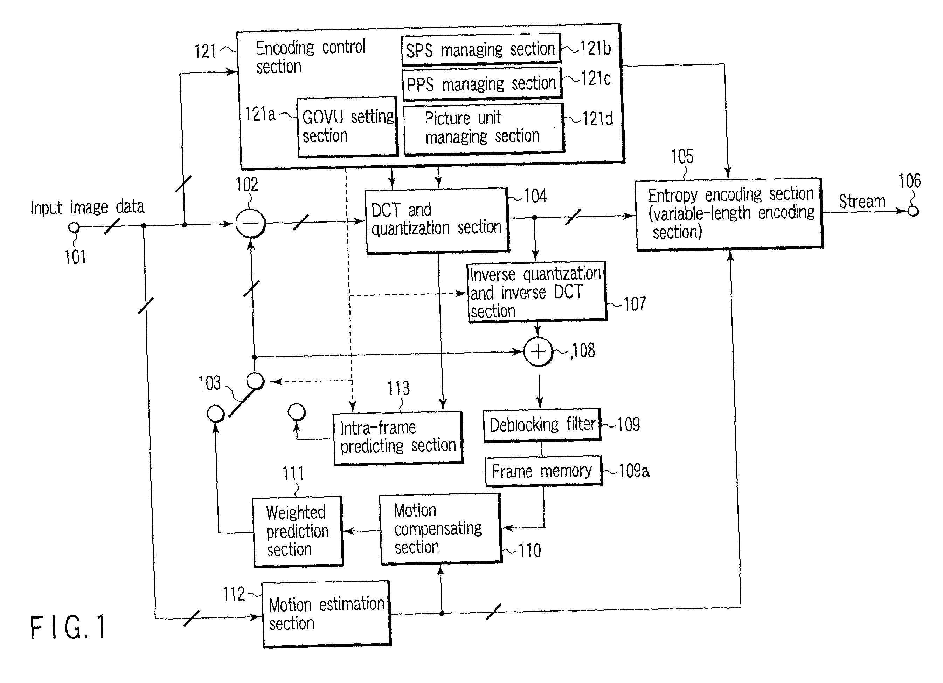

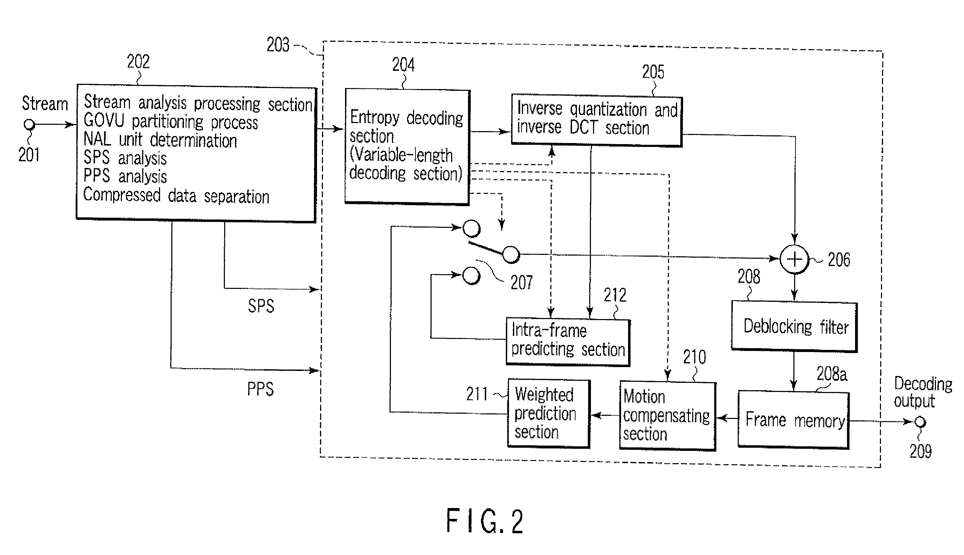

An embodiment of the present invention will be described with reference to the drawings. FIG. 1 is a simplified view of an encoder that encodes image data on the basis of the H.264/AVC standards. FIG. 2 is a simplified view of a decoder that decodes image compressed data contained in a stream output by the encoder shown in FIG. 1.

In FIG. 1, image data supplied to an input terminal 101 is provided to a subtractor 102. The subtractor 102 subtracts image data from a switch 103, from the input image data during an inter-frame process. Output data from the subtractor 102 is subjected to a discrete cosine transforming process and a quantization process by a DCT and quantizing section 104. An output from the DCT and quantizing section 104 is then subjected to variable-length encoding by an entropy encoding section (that may also be referred to as a variable-length encoding section) 105. The output is then led out to an output terminal 106 as a stream.

An output from the DCT and quantizing section 104 is input to an inverse quantization and inverse DCT section 107 for an inverse transformation. An adder 108 then adds the inversely transformed data to the image data from the switch 103 to reproduce and output a frame image. The output from the adder 108 is input to a deblocking filter 109 in order to suppress the distortion around the block boundary into which the image data has been partitioned by the DCT process and quantizing process.

The image data output by the deblocking filter 109 is input to a frame memory 109a. A motion compensating section 110 reads encoded images from the frame memory 109a on the basis of an image motion vector from a motion estimation section 112 to generate data on predicted images. That is, the motion compensating section 110 generates predicted images on the basis of the motion information so that the already encoded images stored in the frame memory 109a are similar to the images input to the input terminal 101. The motion estimation section 112 uses the image data input to the input terminal 101 to detect a motion vector indicative of motion in moving pictures. The motion vector is also referenced by the data. Accordingly, the motion vector is sent to the entropy encoding section 105 and inserted into a header of a predetermined transmission unit.

For the output image data from the motion compensating section 110, a weighted prediction section 111 predicts the brightness of the images and weights and outputs the images. The image data output by the weighted prediction section 111 is provided to the subtractor 102 via the switch 103.

The image data from the weighted prediction section 111 contains predicted images made as similar to the input image data as possible. Consequently, an output from the subtractor 102 has an efficiently reduced data amount. This means high compression efficiency.

In this case, if a scene change or the like occurs, an intra-frame compressing process is executed. That is, an intra-frame predicting section 113 predicts the interior of a image frame on the basis of already encoded pixels around a block to be encoded. The subtractor 102 then subtracts an intra-frame prediction signal from the image data input to the input terminal 101. The result of the subtraction is led to the DCT and quantization section 104.

In this manner, in a loop formed of the DCT and quantization process 104, intra-frame predicting section 113, switch 103, and subtractor 102, an image compressing process for one frame is executed. Image data (referred to as an I (Intra) slice) compressed into a frame is inversely transformed and decoded by the inverse quantization and DCT section 107. A deblocking filter 109 then reduces the distortion on the block boundary of the decoded data. The resulting data is then stored in a frame memory 109a. This image data is image compressed data obtained using the data contained only in the frame. The image data is used as a reference for reproduction of a plurality of frames of each moving picture.

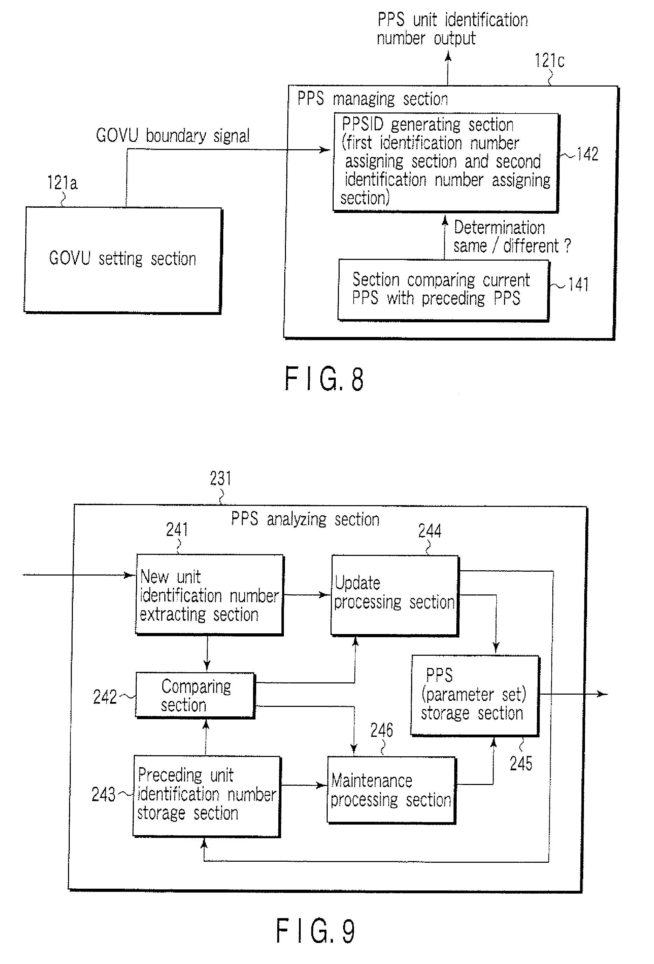

Here, the encoding control section 121 includes a controller. The controller includes a GOVU setting section 121a, an SPS managing section 121b, a PPS managing section 121c, a picture unit managing section 121d, and the like. The PPS managing section 121c contains an identification number (that may also be referred to as identification information) generating section 142 (not shown). An identification number generating section 122c will be described in detail in FIG. 8. SPS stands for a sequence parameter set, and PPS stands for a picture parameter set.

The encoding control device 121 manages input image data and generates management information (for example, the parameter sets SPS and PPS) required to decode image compressed data. The encoding control device 121 also sets an information unit (GOVU) for a stream. The encoding control device 121 generates and manages, for example, management information (reference target unit information) on a picture (slice) unit. A detailed description will be given of GOVU and the management information (for example, the parameter sets) .

The decoder in FIG. 2 will be described. The above stream is input to an input terminal 201. The stream is then input to a stream analysis processing section 202. The stream analysis processing section 202 executes a separating process in accordance with the type of the data unit, the above GOVU dividing process, and a process for analyzing the management information (parameter sets SPS and PPS). The PPS analysis processing section will be described in detail with reference to FIG. 9.

The separated image compressed data is input to an entropy decoding section (that may also be referred to as a variable-length transforming section) 204 in a decoder 203. The entropy decoding section 204 then executes a decoding process corresponding to the entropy encoding section 105 in FIG. 1.

The image compressed data is input to an inverse quantization and inverse DCT section 205 for decoding. An adder 206 adds output data from the inverse quantization and inverse DCT section 205 to reference image data from a switch 207 to reproduce image data. A deblocking filter 208 reduces block distortion in the image data output by the adder 206. Output image data from the deblocking filter 208 is led out to an output terminal 209 as a decoding output. The output image data is also stored in an frame memory 208a.

A motion compensating section 210 uses sent information on a motion vector to correct the motion in the decoded image data stored in the frame memory 208a. A weighted prediction section 211 then weights the brightness of the corrected image data output by the motion compensating section 210. The weighted prediction section 211 inputs the image data to the adder 206 via the switch 207. When image data (that may also be referred to as an I (Intra) slice or an IDR (Instantaneous Decoding Refresh) picture) compressed into a frame arrives, a path is constructed for the inverse quantization and inverse DCT section 205, an intra-frame predicting section 212, the switch 207, the adder 206, the deblocking filter 208, and the motion compensating section 210. Then, intra-frame image compressed data is decoded, and image data for one frame is constructed in an image memory in the motion compensating section 210.

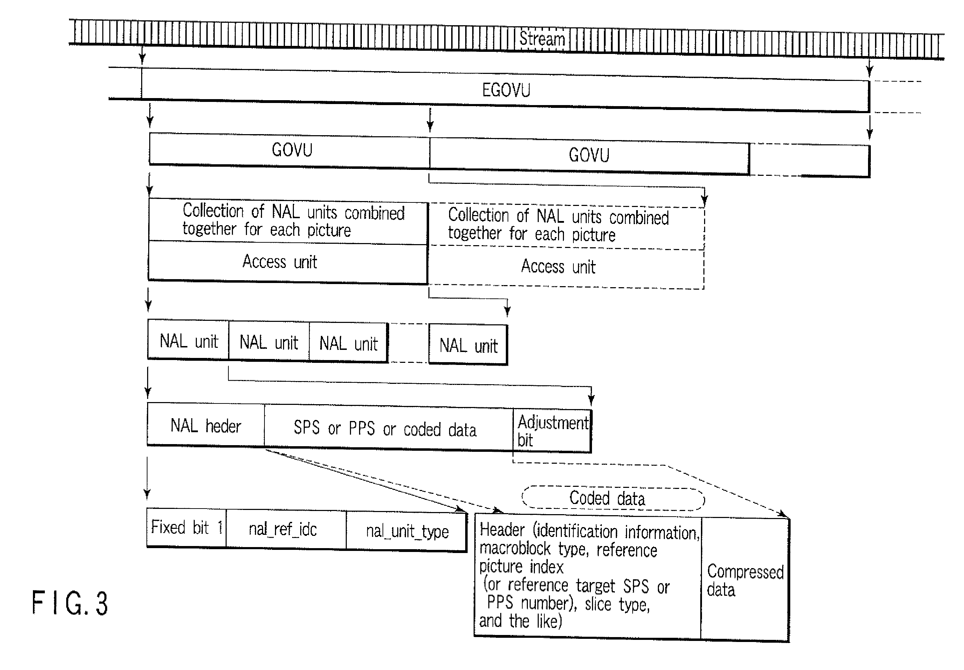

FIG. 3 is a hierarchical structure of the above stream which conforms to the H.264/AVC standards and to which the present invention is applied. The stream is referred to as, for example, VOB (Video Object Unit). The stream is partitioned into major units called EGOVU (Extended-Group Of Video Units). One EGOVU has one or more GOVUs (Groups Of Video Units). EGOVU is not necessarily required, and the stream may be partitioned directly into GOVUs.

One GOVU contains one or more access units. One access unit contains a plurality of NAL (Network Abstraction Layer) units. NAL is located between a video recording layer (VCL) and a lower system (layer) that transmits and stores encoded information. NAL associates VCL with the lower system.

The NAL unit is composed of a NAL header and RBSP (Raw Byte Sequence Payload; raw data obtained by compressing moving pictures) in which information obtained by VCL is stored. Accordingly, there are plural types of NAL units. The type of the NAL unit can be determined on the basis of nal_unit_type in a NAL header. nal _ref_idc is described in the NAL header and utilized as identification information for the NAL unit. That is, nal__ref_idc indicates whether or not to reference the present NAL unit.

The data contents of the RBSP portion include SPS, PPS, and encoded information compressed data. These pieces are distinguished from one another using nal_unit_type.

The RBSP portion also has a header. The following information is described in the header: identification information (for example, a number), a macroblock type, a referenced picture information (for example, a number), reference target SPS information (for example, a number), reference target PPS information (for example, a number), a motion vector for a motion compensation block, and the like. If the NAL unit is for the parameter set (SPS or PPS), SPS information (for example, a number) or PPS information (for example, a number), reference target SPS information (for example, a number), and the like are described in the head. Parameter information is described in a compressed data portion.

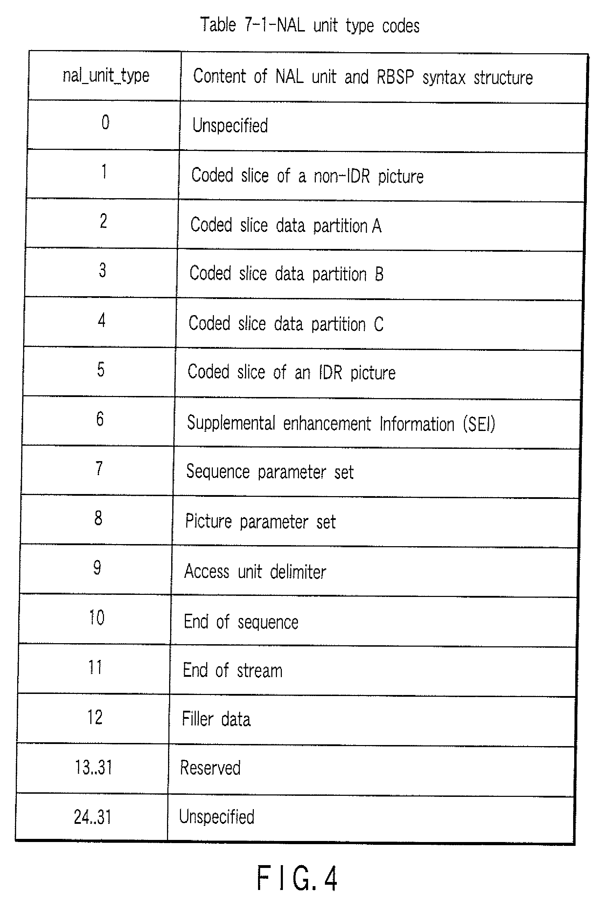

FIG. 4 shows identifiers indicative the types of NAL units and the contents of the identifiers.

The access unit is a collection of plural NAL units (slices) of each picture. One or more access units may be present in GOVU. The access unit contains one or more VCL NALs each containing encoded information compressed data. In addition, SPS, PPS, and other additional information may be present in the access unit. One PPS may always be added to the access unit so that all the slices constituting the access unit reference the same PPS.

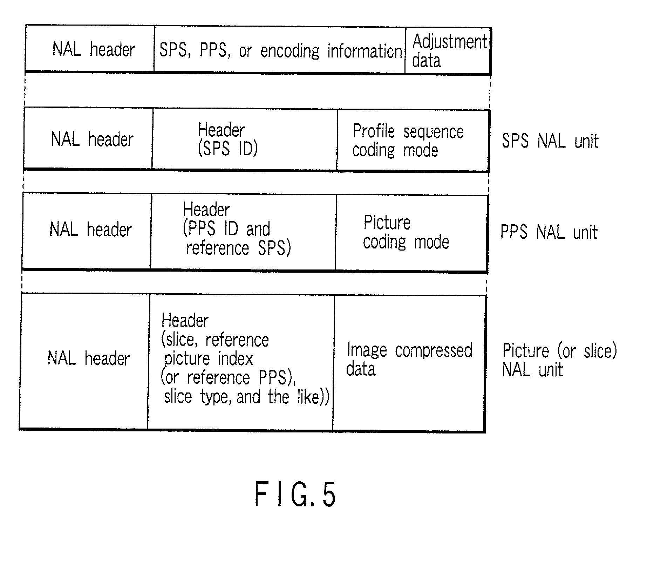

FIG. 5 shows various types of NAL units. An SPS NAL unit has information such as a profile in a data portion. A header of the data portion contains an SPS number (SPS ID) that is its own identification number. A PPS NAL unit has information such as an encoding mode in a data portion. A header of the data portion contains a PPS number (PPS ID) that is its own identification number. The number of SPS to be referenced (reference target SPS number) is also described in the header. A VCL NAL unit has image compressed data in a data portion. A header of the data portion contains the identification number of the VCL NAL unit, a referenced picture number indicative of a picture to be referenced (or a reference target PPS number used to identify PPS to be referenced), motion vector information on a motion compensation block, a slice number, and the like.

As described above, the reference target PPS number (PPS ID) used to identify PPS to be referenced is described in the VCL NAL unit. The reference target SPS number (SPS ID) used to identify SPS to be referenced is described in the PPS NAL unit.

The rules described below are set for the assignment of unit identification numbers. That is, an image data unit (picture unit) has a PPS unit identification number described in its slice header as reference target unit information. Further, a PPS unit has an SPS unit identification number described in its header as reference target unit information.

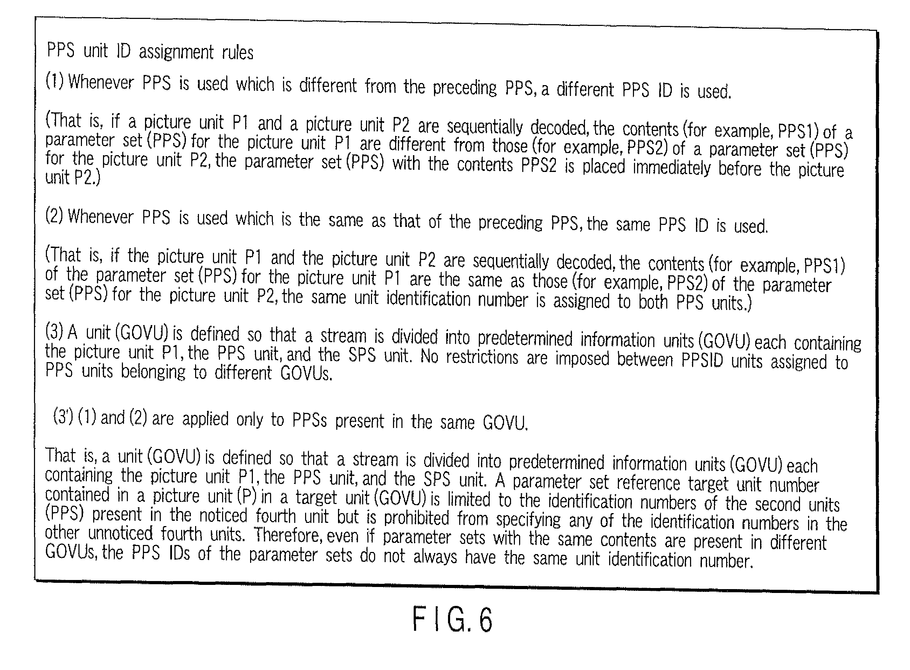

FIG. 6 shows rules for the assignment of the reference target unit information (referred to as a reference target unit number below) and unit identification number.
(1) Whenever PPS is used which is different from the preceding PPS, a different PPS ID is used.
   (That is, if a picture unit P1 and a picture unit P2 are sequentially decoded, the contents (for example, PPS1) of a parameter set (PPS) for the picture unit P1 are different from those (for example, PPS2) of a parameter set (PPS) for the picture unit P2, the parameter set (PPS) with the contents PPS2 is placed immediately before the picture unit P2. The unit identification number (PPS ID) of PPS is different from that of PPS for the picture unit P1.)
(2) Whenever PPS is used which is the same as that of the preceding PPS, the same PPS ID is used.
   (That is, if a picture unit P1 and a picture unit P2 are sequentially decoded, the contents (for example, PPS1) of the parameter set (PPS) for the picture unit P1 are the same as those (for example, PPS2) of the parameter set (PPS) for the picture unit P2, the same unit identification number is assigned to both PPS units.)
(3) A unit (GOVU) is defined so that a stream is partitioned into predetermined information units (GOVU) each containing the picture unit P1, the PPS unit, and the SPS unit. No restrictions are imposed between PPSIDs assigned to PPS units belonging to different GOVUs.
   (3') (1) and (2) are applied only to PPSs present in the same GOVU.

That is, a unit (GOVU) is defined so that a stream is partitioned into predetermined information units (GOVU) each containing the picture unit P1, the PPS unit, and the SPS unit. A parameter set reference target unit number contained in a picture unit (P) in a target unit (GOVU) is limited to the identification numbers of the units (PPS) present in the noticed unit (GOVU) but is prohibited from specifying any of the identification numbers in the other unnoticed units (GOVUs). Therefore, even if parameter sets with the same contents are present in different GOVUs, the PPS IDs of the parameter sets do not always have the same unit identification number.

The rules (1) to (3) may be applied to the identification numbers (SPS IDs) assigned to SPSs.

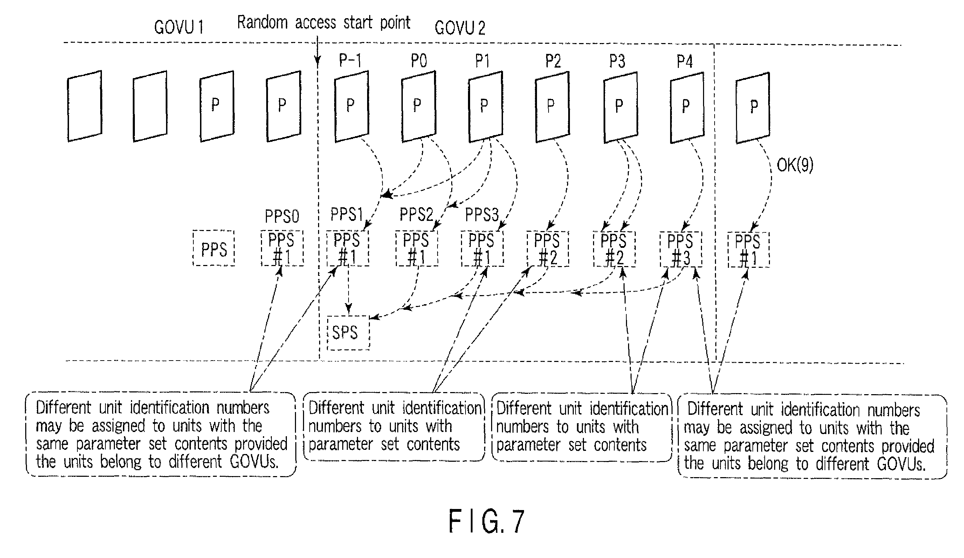

FIG. 7 shows the associations among the units on a stream obtained if the rules described above and shown in FIG. 6 are applied. A unit (GOVU) is defined so that a stream is partitioned into predetermined information units (GOVU) each containing the units (P), (PPS), and (SPS). The same unit identification number is assigned to the units (PPS) in a noticed unit (GOVU2) having the same parameter set contents. FIG. 7 shows GOVUI and the noticed GOVU2. P denotes a unit for image compressed data (picture unit). SPS denotes a unit for a sequence parameter set. PPS denotes a unit for a picture parameter unit. Dotted arrows indicate that the unit has permitted reference target units.

Picture units (P-1), (P0), and (P1) have the same parameter set contents. That is, PPS1, PPS2, and PPS3 have the same contents. In this case, according to the rule (2), the same PPS ID (PPS ID) is assigned to PPS1, PPS2, and PPS3. The decoder decodes the PPS numbers and determines PPSs to be the same when the PPS numbers assigned to the picture units (P-1), (P0), and (P1) are determined to be the same. In this case, after the contents of the first parameter set (PPS1) are decoded, the same parameter set may be used to decode the picture units (P0) and (P1). This eliminates the need to decode the contents of the parameter sets (PPS2) and (PPS3); the contents of the first parameter set (PPS1) are repeatedly used. It is thus not necessary to decode all the contents of the parameter sets (PPS2) and (PPS3) but to recognize only their unit identification numbers.

For the picture units (P1) and (P2), the parameter sets (PPS) referenced by them have different contents. In this case, the corresponding parameter set (PPS) unit is placed immediately before the picture unit (P2) and is provided with a different PPS number. Likewise, for the picture units (P3) and (P4), the parameter sets (PPS) referenced by them have different contents. In this case, the corresponding parameter set (PPS) unit is placed immediately before the picture unit (P4) and is provided with a different PPS number.

The above rule eliminates the need to decode all the parameter sets. This simplifies the decode process and improves data processing speed. That is, the parameter set needs to be decoded only if it has an identification number different from that of the preceding parameter set.

Moreover, the advantages described below can be obtained by using the rule that GOVU is defined so that only the parameter sets belonging to the noticed GOVU are used. That is, if two parameter sets such as (PPS0) and (PPS1) belong to different GOVUs, the same unit identification number can be assigned to (PPS0) and (PPS1) even if they have different parameter set contents. This simplifies a process for assigning unit identification numbers and reduces the number of unit identification numbers required.

When the scope of the rules for parameter sets is limited to within each GOVU as specified in rule (3), encoded moving picture streams can be edited more easily. For example, it is assumed that two moving picture sequences are separately encoded to create two streams (streams 1 and 2), which are then fragmented into GOVUs for edition. Then, if the scope of the rules is not limited to within each GOVU, when GOVU in the stream 1 (GOVU1) is connected to GOVU in the stream 2 (GOVU2), it is necessary to decode the identification numbers of the parameter sets contained in the two GOVUs and to check whether or not the numbers meet the rules. The need for such a checking operation can be eliminated by limiting the scope of the rules for the parameter sets to within each GOVU and imposing no restrictions between different GOVUs. This reduces the amount of processing associated with edition of moving pictures.

FIG. 8 shows an example of a circuit in the encoder which manages PPSs on the basis of the above rules. The PPS managing section 121c is provided with a comparing section 141 that compares the contents of the current PPS referenced by the current picture unit (P) with those of the preceding PPS to obtain a determination output indicating that the contents are the same or different. If the determination output indicates that the contents are the same, the same unit identification number (PPID) as that of the preceding PPS unit is used for the current PPS unit. However, if the determination output indicates that the contents are different, a new appropriate unit identification number (PPID) is created and assigned to the current PPS unit.

To newly create a PPS identification number, for example, a counter generates a sequentially increasing number. However, the counter is reset at the boundary between GOVUs. To assign a unit identification number to the PPS units in the next GOVU, the counter starts with an initial value. A PPSID generating section 142 generates this unit identification number (PPS ID).

FIG. 9 more specifically shows the configuration of a PPS analyzing section 231 in the decoder which recognizes the unit identification number for the parameter set unit generated on the basis of the above rules.

A new unit identification number extracting section 241 extracts the unit identification number from the header portion. If a preceding unit identification number storage section 243 contains no unit identification numbers, the new unit identification number is stored in the preceding unit identification number storage section 243.

A comparing section 242 compares the new unit identification number with the preceding unit identification number in the preceding unit identification number storage section 243. If the comparison indicates that the unit identification numbers are different, an instruction signal is provided to an update processing section 244. On the basis of the instruction signal, the new unit identification number is stored in the preceding unit identification number storage section 243. The corresponding picture parameter set (PPS) is also stored in a PPS storage section 245. The decoder uses this picture parameter set (PPS) to process the subsequent picture units.

If the comparison results in the same unit identification number, an instruction signal is provided to a maintenance process section 246. The contents of the picture parameter set (PPS) in the PPS storage section 245 are maintained. This parameter set is continuously used. This eliminates the need to decode all the contents of the new PPS unit.

To realize signal processing based on the above rules, the encoding control section 121 in the encoder executes GOVU setting, SPS processing, and PPS processing.

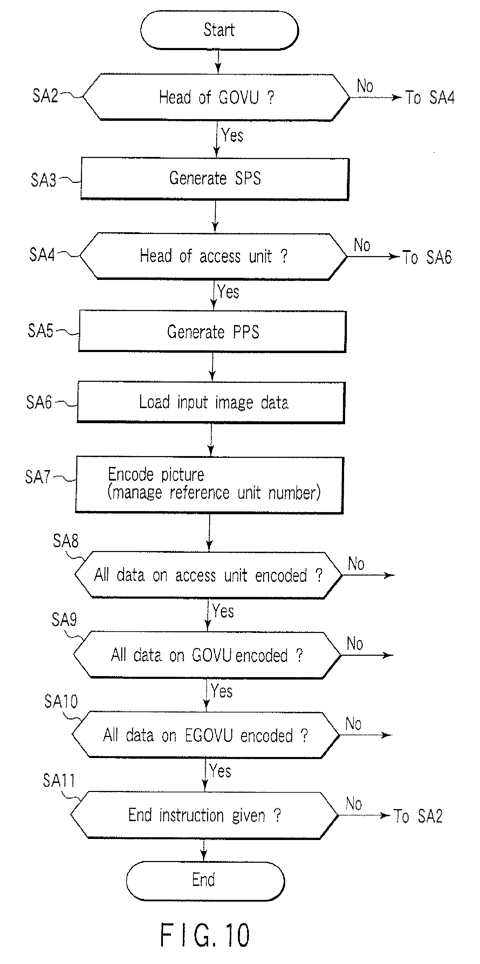

FIG. 10 shows a flowchart used to realize the above signal processing. In accordance with the stream structure shown in FIG. 3, an encoding process is executed using the above units in order of decreasing unit size, that is, in the order of EVOBU, GOVU, access units, and slices. A sequence parameter set (SPS) is generated at the head of GOVU (steps SA2 and SA5). A picture parameter set (PPS) is generated at the head of an access unit (step SA5). Then, the slices are specifically encoded (steps SA6 and SA7). The encoder determines whether or not all the data for the access unit has been encoded (step SA8). Further, to determine parameter sets and referenced pictures for decoding, the reference target unit number is managed. If the encoder does not determine in step SA8 that all the data for the access unit has been encoded, the process returns to step SA4. If the encoder determines in step SA8 that all the data for the access unit has been encoded, it then determines whether or not all the data for the next GOVU has been encoded (step SA9). If the encoder does not determine that all the data for GOVU has been encoded, the process returns to step SA2. If the encoder determines that all the data for GOVU has been encoded, it then determines whether or not all the data for EVOBU has been encoded (step SA10). If the encoder does not determine that all the data for EVOBU has been encoded, the process returns to step SA2. If the encoder determines that all the data for EVOBU has been encoded, it then determines whether or not an end instruction has been given (step SA11). If the encoder does not determine that an end instruction has been given, the process returns to step SA1. If the encoder determines that an end instruction has been given, the encode operation is finished.

The units containing the generated image compressed data, SPS, and PPS are output to the output terminal 106 as a stream.

When data processing is executed in accordance with the flowchart in FIG. 10, the rules described in FIG. 6 are applied. The encoder includes means for realizing the rules. The encoding control section 121, shown in FIG. 1, is a controller on which the realization of the rules is based. The main blocks in the encoding control section 121 include the GOVU setting section 121a, the SPS managing section 121b, and the PPS managing section 121c. The encoding control section 121 is also provided with a picture (slice) unit managing section. The PPS managing section 121c assigns identification numbers to the units as described above. The PPS managing section 121c assigns reference target unit numbers to enable the use of the identification numbers.

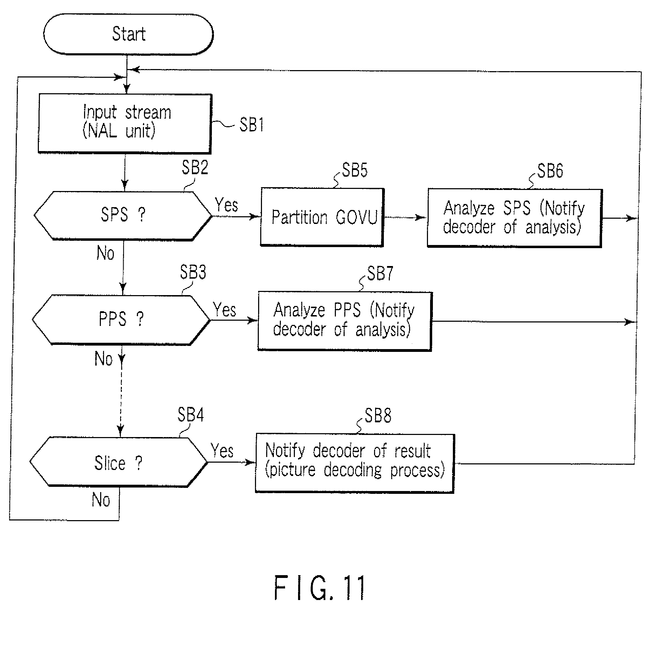

FIG. 11 is a flowchart showing operations performed by the stream analysis processing section 201 in the decoder (FIG. 2), which receives and decodes the above stream. When the stream is input to decoder, the NAL header of each NAL unit is processed. Since nal_unit_type is described in the NAL header as shown in FIG. 3, the type of the NAL unit can be identified, that is, the NAL unit can be determined to be of the VCL type containing image compressed data or for SPS or PPS (FIG. 5).

In step SB1, the NAL unit is identified, and in step SB2, the stream analysis processing section 201 determines whether or not the NAL unit is for SPS. If the NAL unit is not for SPS, then in step SB3, the stream analysis processing section 201 determines whether or not the NAL unit is for PPS. If the NAL unit is not for PPS, then in step SB4, the stream analysis processing section 201 determines whether or not the NAL unit is of the VCL type. FIG. 11 shows the expression "slice?" in step SB4 because the H.264/AVC standards use the term "slice" as an image compression unit.

If an SPS NAL unit is detected in step SB2, this is determined to be the head of the noticed GOVU as is apparent from the above description of the rules. Accordingly, a delimiter for the head of the noticed GOVU is set for the input current stream. A delimiter for the tail of the preceding GOVU is set for the stream preceding the current one (step SB5). Then, SPS is restored and analyzed starting with the SPS NAL unit. A predetermined setting section in the decoder which is suitable for the parameter set is notified of this. SPS is then stored.

If a PPS NAL unit is detected in step SB3, SPS is restored and analyzed and a predetermined setting section in the decoder is notified of this. SPS is then stored.

Thus, an encoding mode is set for the decoder on the basis of SPS or PPS. Then, in step SB4, when a VCL NAL unit is detected, the image compressed data in its data portion is decoded by the decoder 203.

As described above, the embodiment includes a plurality of characteristic inventions. This will be described below in brief. The present invention is characterized by the above stream structure, an encoding method and an encoder which implements such a stream structure, and a decoding method and a decoder which implements such a stream structure.

The following units are defined: the unit (P) containing a unit identification number and image compressed data as well as a reference target unit number, the unit (PPS) containing a unit identification number and referenced by the unit (P) in order to decode the image compressed data, the unit (PPS) containing information relating to the entire related picture and to at least an entropy encoding mode and an encoding mode for a quantization parameter initial value for each picture, and the unit (SPS) containing a unit identification number and referenced by the unit (PPS) in order to decode the image compressed data, the unit (SPS) containing information relating to the entire sequence to which the unit belongs and to at least a profile, a level, and an encoding mode for the entire sequence. In the stream, a plurality of these units are arranged in the direction of time series.

If a plurality of units (PPS) referenced by a unit (P) have the same parameter set contents, the same unit identification number is assigned to the units (PPS).

A unit (GOVU) may be defined so that a stream is partitioned into predetermined information units (GOVU) containing the first, second, and third units. The same unit identification number is assigned to the units (PPS) in a noticed unit (GOVU) having the same parameter set contents.

The present invention has these characteristics even when implemented as a moving picture encoder that generates the above stream and a moving picture decoder that receives and decodes the stream.

According to the above means, if there are a plurality of PPSs having the same unit identification information, then decoding only one PPS enables the use of the decoded PPS to omit the process of decoding the other PPSs.

## Claims

1. A method for generating an encoded stream containing first units (P-1, P0, P1, P2, ....) each containing unit identification information and image compressed data as well as a reference target unit number, and a plurality of second units (PPS and SPS) each containing unit identification information and a parameter set referenced by the first unit and used to decode the image compressed data, the first units (P-1, P0, P1, P2, ....) and the second units (PPS and SPS) being arranged in a direction of time series, the method **characterized by** comprising:
determining if a plurality of second units (PPS) referenced by the first unit (for example, P0) have the same parameter set contents,
then if the second units (PPS) have the same parameter set contents, assigning the same unit identification information (PPSID) to the second units (PPS).

2. The method for generating an encoded stream according to claim 1, **characterized in that** a third unit (GOVU) is defined so that the stream (EGOVU) is partitioned into predetermined information units (GOVU) each containing the first unit (P) and the second units (PPS and SPS), and the same unit identification number (PPSID) is assigned to the second units (PPS) in the third unit (GOVU) having the same parameter set contents.

3. The method for generating an encoded stream according to claim 2, **characterized in that** to newly generate the unit identification information (PPSID) in the third unit (GOVU), a counter generates a sequentially increasing number.

4. The method for generating an encoded stream according to claim 3, **characterized in that** the counter is reset in response to a GOVU boundary signal, and the unit identification information (PPSID) generated in a next third unit (GOVU) starts with an initial value.

5. A method for generating an encoded stream containing first units (P) each containing unit identification information and image compressed data as well as a reference target unit number, and a plurality of second units (PPS, SPS) each containing unit identification information and a parameter set referenced by the first unit and used to decode the image compressed data, the first units and the second units being arranged in a direction of time series, the method **characterized by** comprising:
determining a result that the parameter set contents referenced by a first unit are different from those referenced by a next first unit, in the decoding order; and
placing a different unit identification information, in the second units.

6. The method for generating an encoded stream according to claim 5, **characterized in that** a third unit (GOVU) is defined so that the stream is partitioned into predetermined information units each containing the first unit and the second units, and different unit identification information are assigned to the second units which are belong to the adjacent third units.

7. A moving picture encoder which obtains a stream containing first units (P-1, P0, P1, P2 ....) each containing unit identification information and image compressed data as well as a reference target unit number, and a plurality of second units (PPS,SPS) each containing unit identification information and a parameter set referenced by the first unit and used to decode the image compressed data, the first units and the second units being arranged in a direction of time series, the encoder **characterized by** comprising:
a comparing section (141) which determines if a plurality of second units referenced by the first unit have the same parameter set contents; and
an identification information assigning section (142) which, if the second units have the same parameter set contents, assigns the same unit identification information to the second units.

8. The moving picture encoder according to claim 7, **characterized by** further comprising a third unit setting section which defines a third unit (GOVU) so that the stream is partitioned into predetermined information units each containing the first unit and the second units,
wherein the identification information assigning means (142) assigns the same unit identification number to the second units in the third unit having the same parameter set contents.

9. The moving picture encoder according to claim 7, **characterized in that** if the parameter set contents referenced by a first unit are different from those referenced by a next first unit, different unit identification information is placed in the second unit.

10. A moving picture decoder which decodes a stream containing first units each containing unit identification information and image compressed data as well as a reference target unit number, and a plurality of second units each containing unit identification information and a parameter set referenced by the first unit and used to decode the image compressed data, the first units and the second units being arranged in a direction of time series,
the decoder decoding, if a plurality of second units referenced by the first unit have the same parameter set contents, the stream in which the plurality of second units are provided with the same unit identification information, the decoder **characterized by** comprising:
a unit identification information recognizing section (241) which recognizes unit identification information on the currently loaded second unit;
a comparing section (242) which compares the loaded unit identification information with already recognized preceding unit identification information; and
a parameter set holding section (245) which, if the comparison executed by the comparing section results in the same unit identification information, continuously uses the parameter set used to recognize the preceding unit identification information, to decode the first unit.

11. The moving picture decoder according to claim 10, **characterized by** further comprising:
a new unit identification number extracting section which extracts unit identification information on the currently loaded second unit;
a comparing section (242) which compares the loaded unit identification information with already recognized preceding unit identification information; and
a parameter set storage section (245) which, if the comparison results in the same unit identification information, continuously uses the parameter set obtained to recognize the preceding unit identification information (PPSID), to decode the first unit.
